(19) Europäisches Patentamt / European Patent Office / Office européen des brevets

(11) **EP 4 361 790 A1**

(12) **EUROPEAN PATENT APPLICATION**
published in accordance with Art. 153(4) EPC

(43) Date of publication:
**01.05.2024 Bulletin 2024/18**

(21) Application number: **22851929.4**

(22) Date of filing: **22.07.2022**

(51) International Patent Classification (IPC):
**G06F 3/14** $^{(2006.01)}$

(52) Cooperative Patent Classification (CPC):
**G06F 3/14; G06F 9/451**

(86) International application number:
**PCT/CN2022/107429**

(87) International publication number:
**WO 2023/011215 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.07.2021 CN 202110877514**

(71) Applicant: **Huawei Technologies Co., Ltd.
Shenzhen, Guangdong 518129 (CN)**

(72) Inventor: **HE, Shujie
Shenzhen, Guangdong 518129 (CN)**

(74) Representative: **Huawei European IPR
Huawei Technologies Duesseldorf GmbH
Riesstraße 25
80992 München (DE)**

(54) **DISPLAY METHOD AND ELECTRONIC DEVICE**

(57) This application provides a display method and an electronic device. In the method, a first electronic device is connected to a second electronic device, the first electronic device obtains dots per inch DPI of the second electronic device, and sets DPI of the first electronic device and the DPI of the second electronic device to be same DPI. The first electronic device receives a first trigger event, where the first trigger event is a trigger operation performed by a user on an icon of a first application. The first electronic device creates a first window in response to the trigger event. The first electronic device obtains an image of the first window based on the first window. The first electronic device scales the image of the first window to obtain a first image. The first electronic device obtains a second image based on the first image, and sends the second image to the second electronic device for display. According to the method in this application, a problem in which a window picture, a font, or the like on a projection device is displayed relatively large can be resolved, and user experience can be improved.

A first electronic device obtains dots per inch DPI of a second electronic device, and sets DPI of the first electronic device and the DPI of the second electronic device to be same DPI — S701

The first electronic device receives a first trigger event — S702

The first electronic device creates a first window in response to the first trigger event — S703

The first electronic device obtains an image of the first window based on the first window — S704

The first electronic device scales the image of the first window to obtain a first image — S705

The first electronic device obtains a second image based on the first image, and sends the second image to the second electronic device for display — S706

FIG. 7

EP 4 361 790 A1

**Description**

**CROSS-REFERENCE TO RELATED APPLICATIONS**

This application claims priority to Chinese Patent Application No. 202110877514.5, filed with the China National Intellectual Property Administration on July 31, 2021 and entitled "DISPLAY METHOD AND ELECTRONIC DEVICE", which is incorporated herein by reference in its entirety.

**TECHNICAL FIELD**

This application relates to the field of terminal technologies, and in particular, to a display method and an electronic device.

**BACKGROUND**

Currently, to meet requirements of a user in different scenarios, a projection technology has been applied increasingly widely. For example, a mobile phone is projected onto a monitor, and then a mobile phone interface is displayed on the monitor. Dots per inch (dots per inch, DPI) of the mobile phone is different from DPI of the monitor, and the DPI of the mobile phone is generally greater than the DPI of the monitor. After the mobile phone is projected onto the monitor, there may be a compatibility problem such as application interface refreshing or application restarting.
To avoid the foregoing case, it needs to be ensured that the DPI of the mobile phone is consistent with the DPI of the display displayed on the monitor. However, because screen resolution of the mobile phone is different from screen resolution of the monitor, when the screen resolution of the mobile phone is higher, if the mobile phone is projected onto the monitor, resources, such as fonts or pictures, on a mobile phone window displayed on the monitor are relatively large, causing poor user experience.

**SUMMARY**

This application provides a display method and an electronic device, to resolve a problem in which a font, a picture, or the like is displayed relatively large on a window of a projection device, and user experience can be improved.
According to a first aspect, this application provides a display method, and the method includes: First, a first electronic device is connected to a second electronic device. Then, the first electronic device obtains DPI of the second electronic device, and sets DPI of the first electronic device and the DPI of the second electronic device to be same DPI. Based on this, the first electronic device may receive a first trigger event, where the first trigger event is a trigger operation performed by a user on an icon of a first application. Then, the first electronic device creates a first window in response to the first trigger event, where the first window is an application window corresponding to the first application. Next, the first electronic device obtains an image of the first window based on the first window, and scales the image of the first window to obtain a first image. Finally, the first electronic device obtains a second image based on the first image, and sends the second image to the second electronic device for display.
In the foregoing technical solution, the first electronic device obtains the DPI of the second electronic device, sets the DPI of the first electronic device and the DPI of the second electronic device to be the same DPI, and then scales, on this basis, the image of the created first window, so that the image of the window is scaled out. That is, a problem in which a font, a picture, or the like is displayed relatively large on the second electronic device can be resolved, and user experience can be improved.
In a possible design, the DPI of the first electronic device includes DPI preset by the first electronic device at delivery and DPI of a virtual display created by the first electronic device.
It should be noted that, in a same-source projection scenario, the DPI of the first electronic device includes only one piece, that is, the DPI preset at delivery. In a different-source projection scenario, the DPI of the first electronic device may include two pieces, that is, the DPI preset at delivery and the DPI of the virtual display.
In a possible design, that the first electronic device sets DPI of the first electronic device and the DPI of the second electronic device to be same DPI includes: The first electronic device sets the DPI preset by the first electronic device at delivery to DPI that is the same as the DPI of the second electronic device. Alternatively, the first electronic device sets the DPI of the second electronic device to DPI that is the same as the DPI preset by the first electronic device at delivery.
In a possible design, that the first electronic device sets DPI of the first electronic device and the DPI of the second electronic device to be same DPI includes: The first electronic device sets the DPI preset by the first electronic device at delivery to DPI that is the same as the DPI of the second electronic device. Alternatively, the first electronic device sets the DPI of the second electronic device to DPI that is the same as the DPI preset by the first electronic device at delivery. Alternatively, the first electronic device sets the DPI of the created virtual display to DPI that is the same as the DPI of the second electronic device. Alternatively, the first electronic device sets the DPI of the second electronic device to DPI that is the same as the DPI of the created virtual display.

In a possible design, that the first electronic device creates a first window includes: The first electronic device obtains a size of a preset window and a preset scale ratio, and creates the first window based on the size of the preset window and the preset scale ratio.

In a possible design, that the first electronic device scales the image of the first window to obtain a first image includes: The first electronic device scales the image of the first window based on the preset scale ratio, to obtain the first image.

In a possible design, the preset scale ratio is a ratio of the DPI preset by the first electronic device at delivery to DPI set in advance by the second electronic device, or the preset scale ratio is a ratio of the DPI preset by the first electronic device at delivery to DPI preset by the second electronic device at delivery.

In a possible design, that the first electronic device receives the first trigger event includes: The first electronic device receives the first trigger event triggered by the user on the first electronic device. Alternatively, the first electronic device receives the first trigger event sent by the second electronic device, where the first trigger event is triggered by the user on the second electronic device.

In a possible design, the image of the first window is displayed on a display of the first electronic device or the virtual display created by the first electronic device.

In a possible design, that the first electronic device obtains a second image based on the first image includes: The first electronic device synthesizes a layer at which the first image is located and a layer at which a background is located, to obtain the second image.

In a possible design, that a first electronic device is connected to a second electronic device includes: The first electronic device is connected to the second electronic device through Wi-Fi, a Bluetooth connection, or a wired connection.

In a possible design, a window type of the first window is a floating window, a full-screen window, or an app multiplier.

According to a second aspect, this application provides an electronic device, including a display, one or more processors, one or more memories, one or more sensors, a plurality of applications, and one or more computer programs, where the one or more computer programs are stored in the one or more memories, the one or more computer programs include instructions, and when the instructions are invoked and executed by the one or more processors, the electronic device is enabled to perform the method according to any one of the first aspect and the possible designs of the first aspect.

According to a third aspect, this application further provides an electronic device. The electronic device includes modules/units for performing the method according to any one of the first aspect or the possible designs of the first aspect. The modules/units may be implemented by hardware, or may be implemented by hardware executing corresponding software.

According to a fourth aspect, this application further provides a computer-readable storage medium, where the computer-readable storage medium stores instructions, and when the instructions are run on an electronic device, the electronic device is enabled to perform the method according to any one of the first aspect and the possible designs of the first aspect.

According to a fifth aspect, this application further provides a computer program product, where when the computer program product is run on an electronic device, the electronic device is enabled to perform the method according to any one of the first aspect and the possible designs of the first aspect in embodiments of this application.

For the foregoing aspects of the second aspect to the fifth aspect and technical effects that can be achieved in the foregoing aspects, refer to descriptions of the technical effects that can be achieved in the foregoing possible solutions of the first aspect. Details are not described herein again.

## BRIEF DESCRIPTION OF DRAWINGS

FIG. 1 is a schematic diagram of an application scenario according to an embodiment of this application;
FIG. 2 is a schematic diagram of a structure of an electronic device according to an embodiment of this application;
FIG. 3 is a flowchart of a display method according to an embodiment of this application;
FIG. 4(a) and FIG. 4(b) are a schematic diagram of user interfaces according to an embodiment of this application;
FIG. 5(a) and FIG. 5(b) are a schematic diagram of user interfaces according to an embodiment of this application;
FIG. 6(a) and FIG. 6(b) are another schematic diagram of user interfaces according to an embodiment of this application;
FIG. 7 is a flowchart of a display method according to an embodiment of this application; and

FIG. 8 is a schematic diagram of a structure of another electronic device according to an embodiment of this application.

## DESCRIPTION OF EMBODIMENTS

Technical solutions in embodiments of this application are described in detail below with reference to the accompanying drawings of the following embodiments of this application.

First, concepts related to embodiments of this application are explained and described.

(1) Screen resolution: The screen resolution means a quantity of pixel dots in the vertical and horizontal directions. The unit is px. For screens of a same size, when screen resolution is low (for example, 640*480), fewer pixels are displayed on the screen, and a size of a single pixel is relatively large. When screen resolution is high (for example, 1600* 1200), more pixels are displayed on the screen, and a size of a single pixel is relatively small. The display resolution is a quantity of pixels displayed on the screen. Resolution 160 * 128 means that there are 160 pixels in the horizontal direction and 128 pixels in the vertical direction. With a same screen size, as resolution gets higher, display effect becomes more elaborate and delicate.

(2) Dots per inch (dots per inch, DPI): The dots per inch means a quantity of pixel dots that can be sampled, displayed, and output per inch. The dots per inch describes pixel density during software display, and is a software attribute and can be configured. The DPI is related to an image size and image resolution. When image sizes are the same, higher image resolution indicates larger DPI. When image resolution is the same, a smaller image size indicates larger DPI. As a DPI value gets higher, the image becomes clearer. In this application, DPI may be calculated by using a screen size and screen resolution.

(3) Pixels per inch (pixels per inch, PPI): The pixels per inch means a quantity of physical pixels per inch of a screen. Screen resolution describes a quantity of pixel dots of a display, is an inherent physical characteristic of a monitor,

$$ppi = \frac{\sqrt{height^2 + width^2}}{size}$$

and cannot be changed. A calculation method of the PPI is as follows: , where height and width indicate a quantity of pixel dots corresponding to the height and width of the display respectively, size indicates the diagonal length of the display, and the unit is inch. That is, the calculation method indicates the quantity of pixel dots based on the height and width of the display. A quantity of pixel dots of a diagonal line is calculated by using the Pythagorean theorem and divided by a size of the diagonal line of the display to obtain PPI. As the PPI value gets higher, the display can display an image in higher density, fidelity becomes higher, and the image becomes more realistic.

(4) Application (application, APP): The application is referred to as the app and is a software program that can implement one or more specific functions. Usually, a plurality of applications may be installed in an electronic device, for example, a camera application, an SMS application, a mailbox application, a video application, a music application, and WeLink. The application in the following embodiments may be an application installed before delivery of the electronic device, or may be an application downloaded from a network or obtained from another electronic device by a user in a process of using the electronic device.

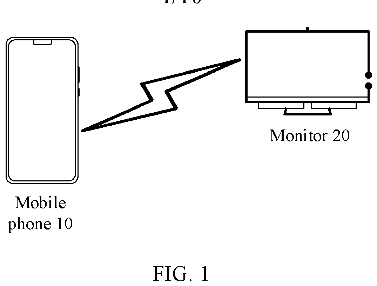

FIG. 1 is a schematic diagram of an application scenario according to an embodiment of this application. As shown in FIG. 1, the application scenario may include a mobile phone 10 and a monitor 20. The mobile phone 10 is a mobile phone that can support projection, and an interface of the mobile phone 10 may be projected onto the monitor 20 for display.

In some embodiments, the mobile phone 10 and the monitor 20 may be interconnected by using a communication network. For example, the communication network may be a local area network, such as a wireless fidelity (wireless fidelity, Wi-Fi) hot spot network, a wireless fidelity peer-to-peer (wireless fidelity peer-to-peer, Wi-Fi P2P) network, a Bluetooth network, a ZigBee network, or a near field communication (near field communication, NFC) network. In a possible implementation, a wireless connection may be established between a plurality of electronic devices based on a mobile network. For example, the mobile network includes a mobile network established based on 2G, 3G, 4G, 5G, and a subsequent standard protocol. In a possible implementation, the plurality of electronic devices may further establish a connection to at least one server by using a mobile network, and the devices transmit data, and/or a message, and/or information, and/or signaling, and/or instructions by using the server.

In some other embodiments, the mobile phone 10 and the monitor 20 may be alternatively connected through a wired connection, for example, may be connected through a data line. This is not specifically limited in this application. Based on the foregoing two communication manners, the mobile phone 10 may project a mobile phone interface onto the monitor 20 in a wireless projection or wired projection manner.

It should be noted that FIG. 1 is merely an example for description. The mobile phone 10 may be further projected onto another large-screen device, for example, a smart screen. This is not limited in this application.

It should be noted that a window scale method provided in embodiments of this application is applicable to any electronic device having a display, such as a mobile phone, a tablet computer, a wearable device (for example, a watch, a band, a smart helmet, or smart glasses), an in-vehicle device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). This is not limited in embodiments of this application. In addition, an example embodiment of the electronic device includes but is not limited to an electronic device running IOS®, Android®, Microsoft®, HarmonyOS®, or another operating system.

The following describes a structure of an electronic device by using the mobile phone in the scenario shown in FIG. 1 as an example.

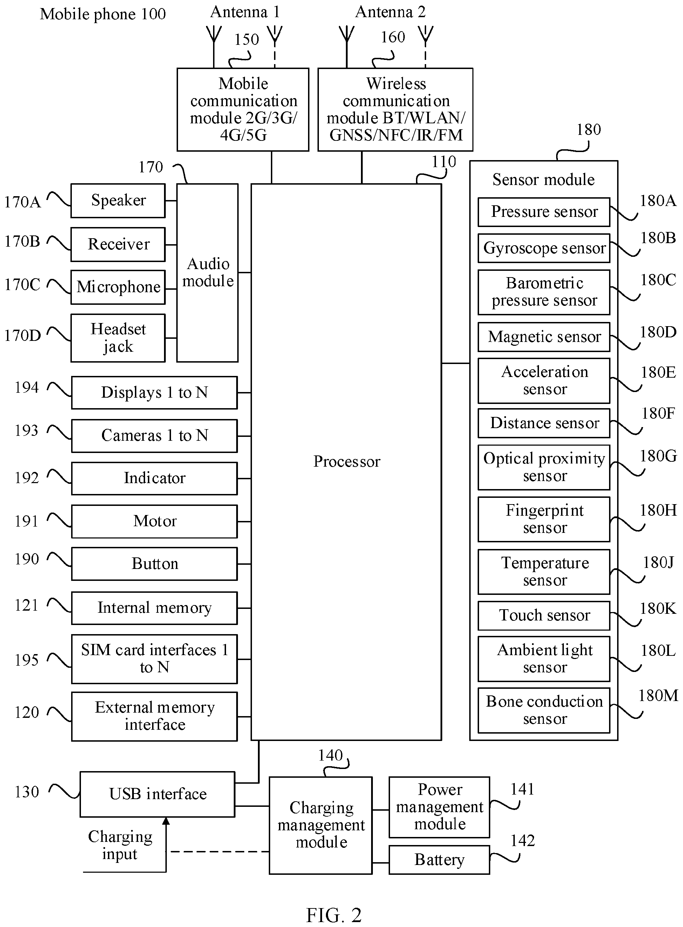

As shown in FIG. 2, the mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the mobile phone 100. The controller may generate an operation control signal based on an instruction operation code and a time sequence signal, to complete control of instruction fetching and instruction execution. A memory may be further disposed in the processor 110, and is configured to store instructions and data. In some embodiments, the memory in the processor 110 is a cache memory. The memory may store instructions or data used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be configured to connect to a charger to charge the mobile phone 100, and may be configured to transmit data between the mobile phone 100 and a peripheral device. The charging management module 140 is configured to receive a charging input from a charger. The power management module 141 is configured to connect to the battery 142, the charging management module 140, and the processor 110. The power management module 141 receives an input from the battery 142 and/or the charging management module 140, and supplies power to the processor 110, the internal memory 121, the external memory, the display 194, the camera 193, the wireless communication module 160, and the like.

A wireless communication function of the mobile phone 100 may be implemented through the antenna 1, the antenna 2, the mobile communication module 150, the wireless communication module 160, the modem processor, the baseband processor, and the like. The antenna 1 and the antenna 2 are configured to transmit and receive electromagnetic wave signals. Each antenna in the mobile phone 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 can provide a solution, applied to the mobile phone 100, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules of the mobile communication module 150 may be disposed in a same device as at least some modules of the processor 110.

The wireless communication module 160 may provide a solution, applied to the mobile phone 100, to wireless communication including a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. For example, in embodiments of this application, a communication connection may be established between different electronic devices through BT or a WLAN.

In some embodiments, in the mobile phone 100, the antenna 1 and the mobile communication module 150 are coupled, and the antenna 2 and the wireless communication module 160 are coupled, so that the mobile phone 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), a fifth generation (fifth generation, 5G) mobile communication system, a future communication system, such as a sixth generation (6th generation, 6G) system, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The display 194 is configured to display a display interface of an application, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a mini-LED, a micro-LED, a micro-OLED, a quantum dot light emitting diode (quantum dot light emitting diode, QLED), or the like. In some embodiments, the mobile phone 100 may include one or N displays 194, and N is a positive integer greater than 1. In this embodiment of this application, the display 194 may be configured to display an application interface.

The camera 193 is configured to capture a still image or a video. The camera 193 may include a front-facing camera and a rear-facing camera.

The internal memory 121 may be configured to store computer-executable program code. The executable program code includes instructions. The processor 110 runs the instructions stored in the internal memory 121, to perform various function applications and data processing of the mobile phone 100. The internal memory 121 may include a program storage area and a data storage area. An operating system, software code of at least one application (for example, iQIYI or WeChat), and the like may be stored in the program storage area. The data storage area may store data (for example, an image and a video) and the like generated in a process of using the mobile phone 100. In addition, the internal memory 121 may include a high-speed random access memory, or may include a nonvolatile memory, for example, at least one magnetic disk storage device, a flash memory, or a universal flash storage (universal flash storage, UFS).

The external memory interface 120 may be configured to connect to an external memory card, for example, a micro SD card, to extend a storage capability of the mobile phone 100. The external memory card communicates with the processor 110 through the external memory interface 120, to implement a data storage function. For example, files such as a picture or a video are stored in the external memory card.

The mobile phone 100 may implement an audio function, for example, music playing and recording, through the audio module 170, the speaker 170A, the receiver 170B, the microphone 170C, the headset jack 170D, the application processor, and the like.

The button 190 includes a power button, a volume button, and the like. The button 190 may be a mechanical button, or may be a touch button. The mobile phone 100 may receive a button input, and generate a button signal input related to a user setting and function control of the mobile phone 100. The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or detached from the SIM card interface 195, to implement contact with or separation from the mobile phone 100.

It may be understood that the components shown in FIG. 2 do not constitute a specific limitation on the mobile phone. The mobile phone may further include more or fewer components than those shown in the figure, or some components may be combined, or some components may be split, or different component arrangements may be used. In the following embodiments, the mobile phone 100 shown in FIG. 2 is used as an example for description.

The following embodiments are described by using an example in which embodiments are applied to the architecture of the mobile phone 100 shown in FIG. 2.

In addition, in the following embodiments, "at least one" means one or more, and "a plurality of" means two or more. In addition, it should be understood that in the descriptions of this application, terms such as "first" and "second" are merely used for distinction and description.

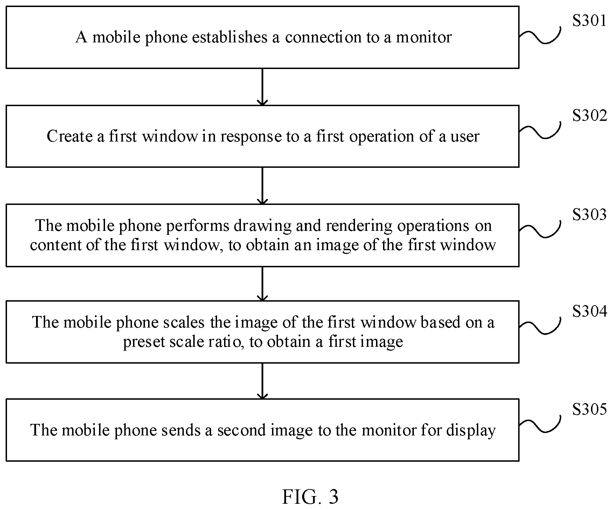

The following describes the method in embodiments of this application by using the mobile phone and the monitor in the scenario shown in FIG. 1 as an example. FIG. 3 is a flowchart of a display method according to an embodiment of this application. As shown in FIG. 3, the method may include the following steps.

S301: The mobile phone establishes a connection to the monitor.

A connection relationship may be established between the mobile phone and the monitor through Bluetooth, Wi-Fi, a wired connection, or the like, to implement a projection function. The projection function means that content displayed on a first device is mirrored to a second device, so that the content displayed on the first device and content displayed on the second device are the same. For example, content displayed on the mobile phone is mirrored to the monitor. In this way, an interface displayed on the mobile phone and an interface displayed on the monitor are a same interface. In addition, in this embodiment of this application, the mobile phone and the monitor may be in a different-source projection scenario, or may be in a same-source projection scenario. This is not limited in this application. It may be understood that the monitor in this application may be a display (for example, a computer display, a large screen, or a projection screen), or may be an electronic device having a display capability, such as a mobile phone, a notebook computer, or an ARVR device.

It should be understood that, in a same-source projection scenario, content displayed on a display of the mobile phone may be projected onto the monitor. In a different-source projection scenario, a virtual display (virtual display) may be created on the mobile phone, and then when an interface of an application is opened, an application interface window of the application is displayed on the virtual display. Finally, graphic data of the application is drawn, rendered, and synthesized, and a 2D graphic is obtained by mixing and outputting in sequence, then, a video data stream corresponding to the 2D graphic is transmitted to the monitor, and the monitor displays the video data stream.

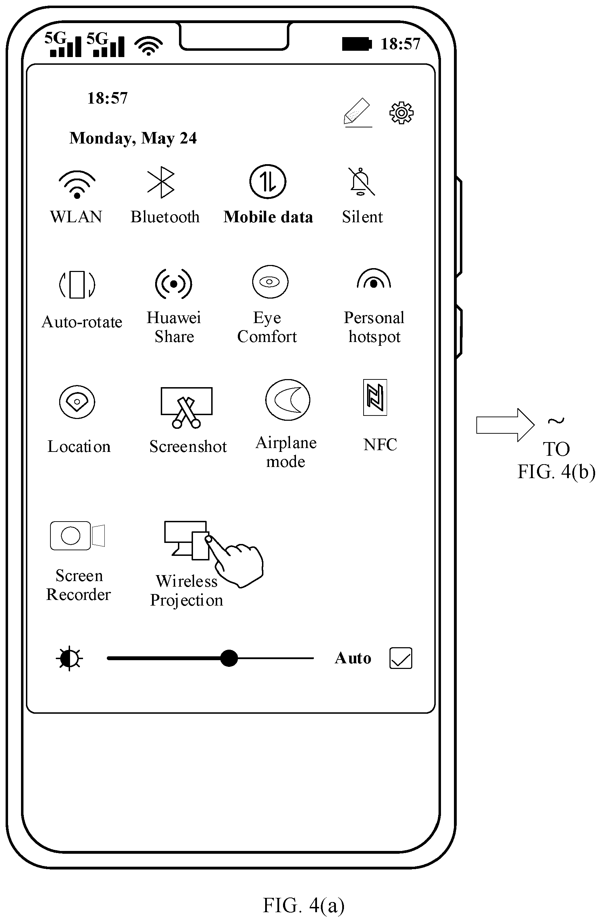

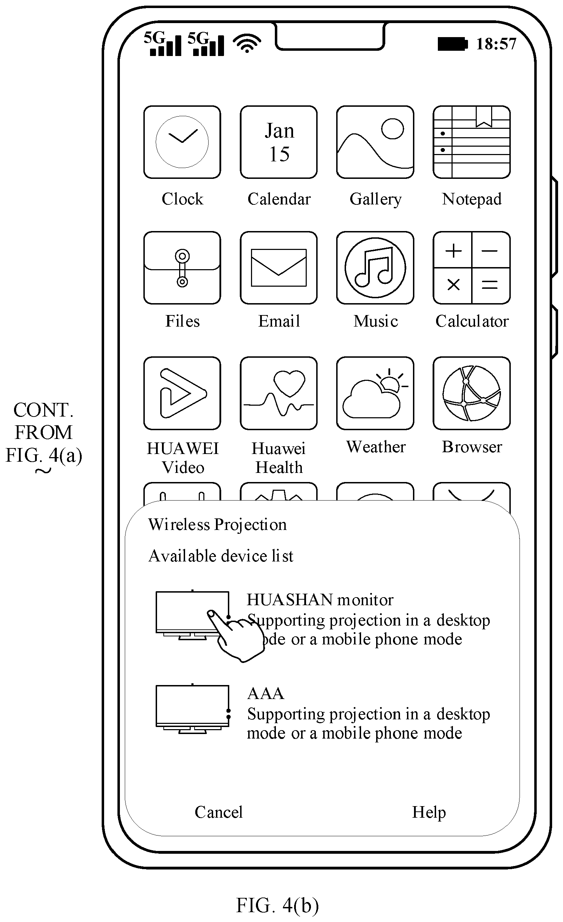

In some embodiments, wireless projection may be performed between the mobile phone and the monitor. The mobile phone may establish a connection to the monitor in response to an operation of a user. For example, the user may open a status bar by sliding downward from the top of the display of the mobile phone, as shown in FIG. 4(a). Then, the user may tap an icon of "Wireless Projection" in the status bar shown in FIG. 4(a). For example, as shown in FIG. 4(b), the mobile phone may display a list of projectable devices in response to a tapping operation of the user. The user may select a projection device from the list of projectable devices shown in FIG. 4(b). For example, a HUASHAN monitor is selected, and then the mobile phone may establish a connection to the HUASHAN monitor. It should be noted that the mobile phone and the monitor may be in a same local area network or may not be in a same local area network when establishing a connection. This is not limited in this application.

In some other embodiments, wired projection may be performed between the mobile phone and the monitor. For example, projection may be performed between the mobile phone and the monitor by using a Type-C transfer cable. One end of the Type-C transfer cable is a Type-C, and the other end is an HDMI, DP, or MiniDP. For example, when the mobile phone is projected onto the monitor, the mobile phone end is connected to the Type-C port, and the monitor end is connected to the HDMI port. Then, an input signal source on the monitor end is switched to the HDMI ingress corresponding to the transfer cable, so that content displayed on the mobile phone can be projected onto and displayed on the monitor. It should be noted that different devices may have different port types. In this embodiment of this application, a transfer cable may be selected based on a port type of a device.

For ease of description, in the following, DPI of the mobile phone may be denoted as "first DPI", DPI of the created virtual display may be denoted as "second DPI", and DPI of the monitor may be denoted as "third DPI". The DPI of the mobile phone may be understood as DPI preset at delivery or DPI set in advance.

To avoid a compatibility problem such as application interface refreshing caused by different DPI of the first device and the second device, in some embodiments, when the mobile phone and the monitor perform same-source projection, the mobile phone may set the DPI of the mobile phone to be the same as the DPI of the monitor. That is, the mobile phone may set the first DPI and the third DPI to same DPI. Specifically, the mobile phone may change the third DPI based on the first DPI (that is, change the third DPI to the first DPI), or may change the first DPI based on the third DPI (that is, change the first DPI to the third DPI).

In some other embodiments, when the mobile phone and the monitor perform different-source projection, the mobile phone may set the DPI of the mobile phone and the DPI of the monitor to be the same, or obtain the DPI of the monitor, and set the DPI of the virtual display to the DPI of the monitor when creating the virtual display. That is, the mobile phone may set the first DPI and the third DPI to the same DPI, and the mobile phone may alternatively set the second DPI and the third DPI to same DPI. Specifically, the mobile phone may change the third DPI based on the first DPI, or may change the first DPI based on the third DPI. Alternatively, the mobile phone may change the third DPI based on the second DPI, or may change the second DPI based on the third DPI.

In some embodiments, in a process in which the mobile phone establishes a connection to the monitor, or before the mobile phone establishes a projection relationship with the monitor, the DPI of the mobile phone and the DPI of the monitor may be set to be the same, or the DPI of the virtual display is set to the DPI of the monitor.

It should be noted that, when the mobile phone establishes a connection to the monitor, for example, in a different-source projection scenario, the virtual display (virtual display) may be created on the mobile phone, and then content displayed on the virtual display is projected onto the monitor. A size (or a horizontal-vertical ratio) of the virtual display may be the same as that of the display of the monitor. In this case, integrity of content displayed on the monitor is ensured.

S302: Create a first window in response to a first operation of the user.

The first window is a window in which an application interface corresponding to the first operation is located.

In some embodiments, after the mobile phone establishes a connection to the monitor, the user may perform the first operation on the monitor. The first operation may be an operation of starting an application by the user, for example, a tapping operation performed by the user on an application icon, or may be a double-click operation performed by the user on an application by using a mouse. Then, the monitor may send a first request message to the mobile phone in response to the first operation of the user, so that the mobile phone creates the first window based on the first request message. For example, if a display of the monitor is a display that supports touch, the first operation may be a tapping operation performed by the user on a notepad application icon, and then the monitor may send the first request message to the mobile phone, so that the mobile phone creates an application window of a notepad application.

The first request message may include: an application identity of a first application. The first application may be the first application corresponding to the first operation. That is, the first operation may be a tapping operation performed by the user on an application icon of the first application. Specifically, after receiving the first request message, the mobile phone may create a window of the first application, that is, the first window, based on the first application identity included in the first request message.

In some other embodiments, after the mobile phone establishes a connection to the monitor, the user may perform the first operation on the mobile phone. The first operation may be a tapping operation performed by the user on an application icon (for example, the application icon of the first application), or may be an operation of triggering, by the user, an application through a voice. Then, the mobile phone may create the first window in response to the first operation of the user, and the first window is used to display the first application. Then, the mobile phone sends content (the first application) of the first window to the monitor, and displays the content on the monitor. For example, the user may tap an application icon of a gallery application on the mobile phone, and the mobile phone may create an application window corresponding to the gallery application in response to a tapping operation performed by the user on the gallery application icon, and display the application window of the gallery on the monitor.

In a possible implementation, the first window may be displayed on the virtual display in a form of a floating window. The width and the height of the first window displayed on the virtual display may be obtained through calculation based on a preset scale ratio (for example, the scale ratio may be denoted as k, and a value range of k may be $0<k<1$) and the width and the height of a preset window. The preset window is a window created based on a specified ratio, that is, a window displayed on the monitor after the first window is scaled. For example, if the width and the height of the preset window are respectively X1 and Y1, and the preset scale ratio is k, the width of the first window displayed on the virtual display is X1/k, and the height of the first window is Y1/k.

It should be understood that the mobile phone may create the first window after obtaining the width and the height of the first window through calculation, that is, obtaining size information of the first window.

The height of the preset window may be obtained through parameter information of the monitor, for example, may be determined based on a screen height, a status bar height, and a DOCK height of the monitor. In a possible implementation, the width and the height of the preset window may be obtained through calculation in the following manner.

Height of the preset window=(Screen height-Status bar height-DOCK height)/2.

Width of the preset window=Height of the preset window*Proportional coefficient x. For example, when the proportional coefficient x is 0.48, the width of the preset window=the height*0.48. Certainly, in this application, the proportional coefficient x may alternatively be another value. This is not specifically limited herein. It should be understood that the DOCK is a shortcut window that is on a display of the electronic device and that is used for task displaying and switching, and content of the DOCK area generally does not change with window switching.

Based on the foregoing descriptions, it can be learned that when creating the first window, the mobile phone may obtain the preset scale ratio. In this embodiment of this application, the preset scale ratio may be obtained in the following manners.

Manner 1: The preset scale ratio may be a ratio of the DPI of the mobile phone to DPI set in advance by the monitor.

For example, if the DPI set in advance by the monitor is 300, and the DPI of the mobile phone is 480, the preset scale ratio may be 300/480=0.625. It should be understood that, for monitors of a same model, DPI preset by the monitors may be the same. If a model of the monitor remains unchanged, and a model of the mobile phone changes, the corresponding preset scale ratio may also change.

Manner 2: The preset scale ratio may be a ratio of the DPI (that is, the first DPI) of the mobile phone to DPI preset by the monitor at delivery, that is, the scale ratio k=the DPI of the mobile phone/the DPI preset by the monitor at delivery. For example, if the DPI of the mobile phone is 480, and the DPI preset by the monitor at delivery is 320, the scale ratio may be: 320/480=0.667.

For Manner 2, in some embodiments of this application, the preset scale ratio may be pre-stored in the mobile phone. Specifically, the mobile phone may pre-store window scale ratios for different electronic devices. When creating the first window, the mobile phone may find, from the pre-stored window scale ratios for different electronic devices, a window scale ratio corresponding to a monitor that establishes a connection to the mobile phone. The pre-stored window scale ratios for different electronic devices may include window scale ratios for projection from a same mobile phone to different devices and window scale ratios for projection from different mobile phones to a same device. For example, for the pre-stored window scale ratios for different electronic devices in the mobile phone, refer to the following Table 1.

**Table 1**

| Source device | Target Device | Scale ratio |
|---|---|---|
| Mobile phone 1 | Monitor 1 | K1 |
| | Monitor 2 | K2 |

In some other embodiments, the mobile phone pre-stores DPI of different electronic devices, and then the mobile phone may calculate a scale ratio based on the DPI of the mobile phone and DPI of another electronic device, and store the scale ratios calculated for the different electronic devices. For example, refer to the following Table 2.

**Table 2**

| Source device | Target Device | Target device DPI | Scale ratio |
|---|---|---|---|
| Mobile phone 1 | Monitor 1 | DPI 1 | K1 |
| | Monitor 2 | DPI 2 | K2 |

It should be understood that the source device in Table 1 and Table 2 may be a mobile phone or the like, and the target device may be a large-screen device such as a monitor. Table 1 and Table 2 are merely examples for description. This is not specifically limited in this application.

Further, because the preset scale ratio is a ratio of the DPI of the mobile phone to the DPI of the monitor, for the mobile phone, the mobile phone may obtain the DPI of the mobile phone, and the DPI of the monitor may be obtained in the following several manners.

Manner 1: When the first device establishes the projection relationship with the second device, the monitor may display DPI, and the DPI may be DPI recommended to the user. Then, the monitor may send the DPI recommended to the user to the mobile phone.

For the manner 1, the scale ratio may be obtained through calculation by using a ratio of the DPI recommended to the user to the DPI of the mobile phone. For example, if the DPI displayed on the monitor is 320, and the DPI of the mobile phone is 480, the scale ratio may be: 320/480=0.6.

Manner 2: Resolution of the monitor and a size of the monitor may be searched for, then the DPI of the monitor is calculated by using the resolution of the monitor and the size of the monitor, and finally the DPI of the monitor obtained through calculation is sent to the mobile phone. Optionally, the resolution of the monitor may be calculated according to 1920*1080, and the size of the monitor may be calculated according to 23 inches.

Manner 3: The monitor may send resolution information and size information of the monitor to the mobile phone. After receiving the resolution information and the size information of the monitor, the mobile phone may calculate the DPI of the monitor based on the resolution of the monitor and the size of the monitor.

Optionally, the resolution of the monitor in this embodiment of this application is system display resolution, that is, resolution used on an actual display interface of the electronic device. The system display resolution may be system display resolution that is adapted by the electronic device by default based on a detected monitor size, or may be system display resolution that is set by the user. Generally, the user can select different system display resolution in system settings. Generally, system display resolution of the electronic device is equal to or less than screen resolution of the display. The screen resolution describes a quantity of pixel dots of the display, is inherent to the monitor, and cannot be changed. It should be understood that, because screen sizes, resolution, and the like of electronic devices may be different, scale ratios may be different when devices are different. Certainly, for a same electronic device, the scale ratio may be fixed.

S303: The mobile phone performs drawing and rendering operations on the content of the first window, to obtain an image of the first window.

In some embodiments, after obtaining the width and the height of the first window, the mobile phone may create the first window, and then the mobile phone may perform drawing and rendering operations on the content of the first window, to obtain an interface corresponding to the first operation, that is, to obtain the image of the first window.

S304: The mobile phone scales the image of the first window based on a preset scale ratio to obtain a first image.

For ease of description, in this embodiment of this application, the image obtained after the image of the first window is scaled may be denoted as the "first image".

Based on S303, there may be two cases for the preset scale ratio. Therefore, when the image of the first window is scaled in this step, the following two cases may further be included.

Case 1: The image of the first window is scaled based on a ratio of the DPI of the mobile phone to the DPI set in advance by the monitor to obtain an image of a second window.

Case 2: The image of the first window is scaled based on a ratio of the DPI of the mobile phone to the DPI preset by the monitor at delivery to obtain an image of a second window.

S305: The mobile phone sends a second image to the monitor for display.

In some embodiments, after scaling the image of the first window, the mobile phone may obtain the second image, and then may synthesize a plurality of layers (Layers) on the display, for example, a layer at which the scaled image is located and a layer at which a background is located, to obtain the second image. The second image may be one frame of image, or may be a plurality of frames of images obtained after the foregoing operations are performed. Then, the mobile phone may encode the second image into a video stream and send the video stream to the monitor. Correspondingly, after receiving the video stream, the monitor may decode the video stream to obtain data displayed on the second image. Finally, the data is rendered and then displayed on the display of the monitor.

The following describes the foregoing process with reference to a schematic diagram of a user interface.

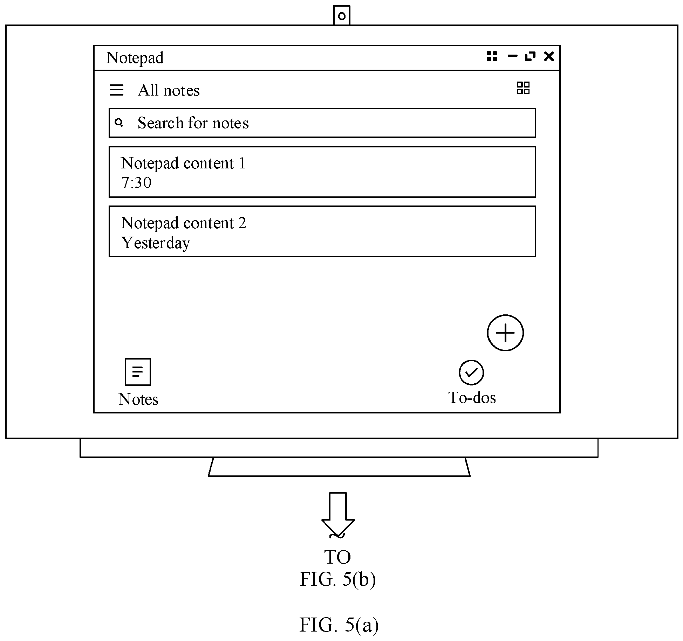

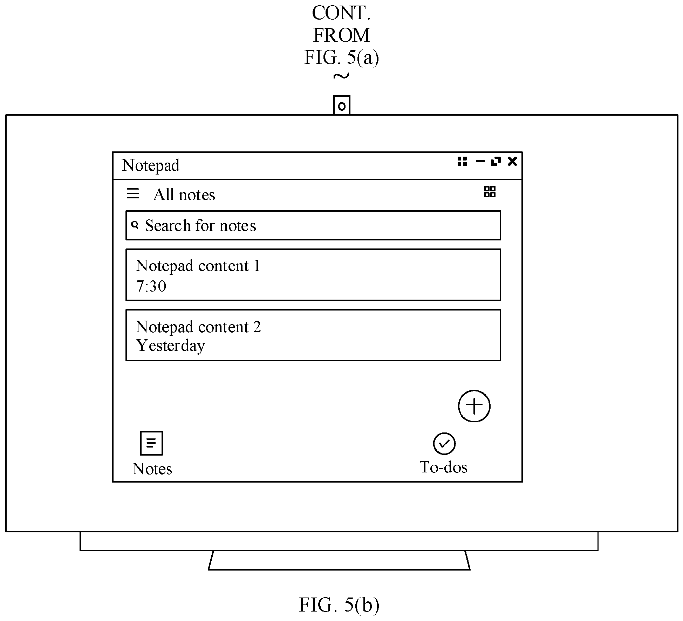

In some embodiments, content displayed on the monitor is content displayed on the virtual display. In this case, before the mobile phone scales the first window, sizes of an application window displayed on the virtual display and elements in the window are relatively large. For example, FIG. 5(a) and FIG. 5(b) are a schematic diagram of the user interfaces according to this embodiment of this application. If the first operation of the user in S302 is an operation of opening the notepad application, the first window is the application window of the notepad. In this case, an interface shown in FIG. 5(a) may be displayed on the monitor before scaling. A size of an interface element displayed on the notepad application window is relatively large, for example, a font of a character shown in FIG. 5(a) is relatively large.

Because the size of the interface element on the interface shown in FIG. 5(a) is relatively large, and does not comply with a UX design specification, in this embodiment of this application, the application window may be scaled, so that a scaled interface display can meet the UX design specification. For example, the notepad application window shown in FIG. 5(a) may be scaled, to obtain a scaled application window. Then, the SurfaceFlinger service in the mobile phone may synthesize a plurality of layers (Layers) on the display, for example, a layer at which the background on the display is located and a layer at which the application window is located, and then output a synthesized 2D graphic. Finally, the output 2D graphic is sent to the monitor for display. For example, for an interface displayed on the monitor by the scaled window, refer to FIG. 5(b). It can be clearly seen from FIG. 5(a) and FIG. 5(b) that: a font on the notepad application window shown in FIG. 5(b) is smaller than a font on the notepad application window shown in FIG. 5(a).

Further, because a title bar on the window belongs to an application process, the UX design specification may not be met after the title bar is scaled. Therefore, in this embodiment of this application, the title bar may not be scaled. To be specific, the title bar is still displayed in a size that is the same as the size of the title bar in the first window. That is, a scale ratio of the title bar on the first window to the title bar on the second window is 1.

It should be noted that a window scale method in this embodiment of this application may be applicable to windows of different window types, for example, may be applicable to scaling of a floating window, window scaling in an app multiplier type, and window scaling of a full-screen display window in an immersive scenario. That is, regardless of the type of the window, the window can be scaled as a whole. The app multiplier means dual-screen display of application content on the screen, and a home page and a content page of an application are displayed at the same time. The immersive scenario means full-screen display of the application content.

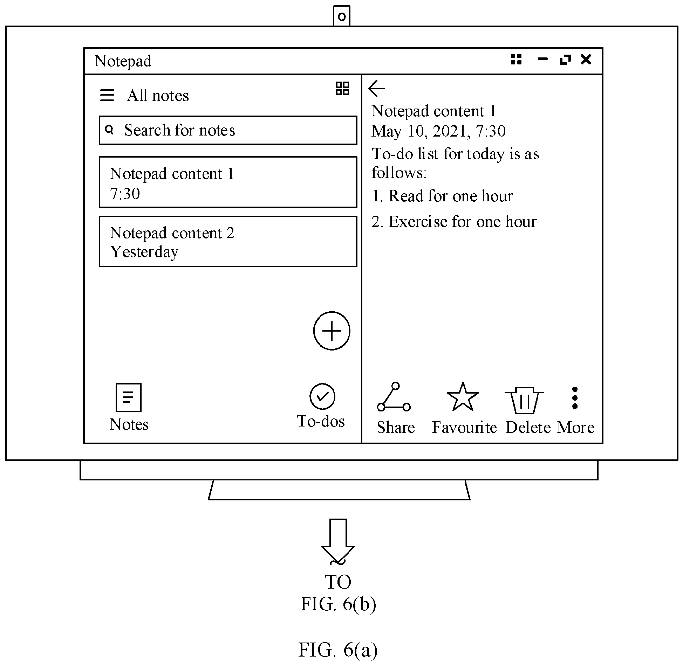

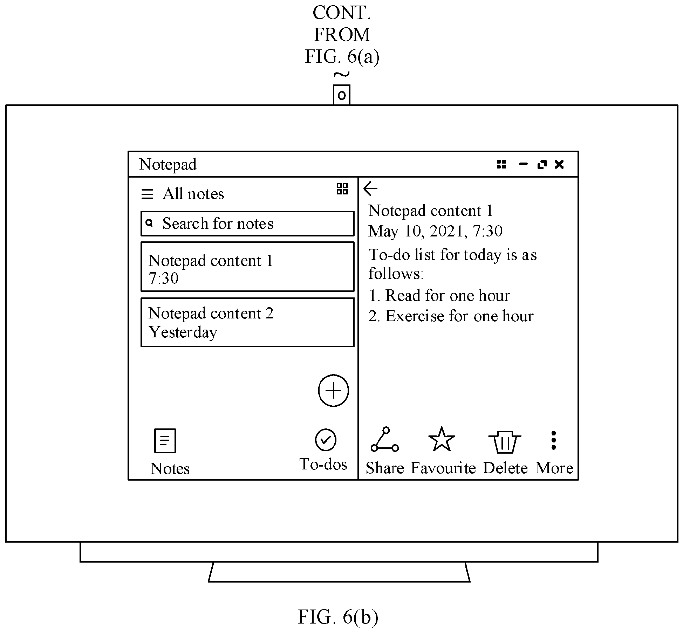

For example, it is assumed that the first window is a window of the app multiplier. That is, the first window includes two sub-windows, and the two sub-windows are windows corresponding to different interfaces of a same application. As shown in FIG. 6(a) and FIG. 6(b), for example, the first window includes a sub-window 1 and a sub-window 2. The sub-window 1 is a window in which a main interface of the notepad is located, and the sub-window 2 is a window in which an interface of notepad content 1 is located. For the window of the app multiplier, the sub-window 1 and the sub-window 2 may be scaled at the same time. For example, the size of the first window is 1080 dp*2340 dp, as shown in FIG. 6(a). If the scale ratio is 0.7, the size of the second window is 756 dp*1638 dp, and the scaled second window may be shown in FIG. 6(b).

According to the solutions in this embodiment of this application, the content in the window displayed on the projection device in a projection scenario can comply with the UX design specification, and the windows of different types can be scaled, thereby resolving a window compatibility problem of an application in different window types.

The foregoing embodiment is described by using an example in which the mobile phone is projected onto the monitor. In this embodiment of this application, if an application interface on the mobile phone is switched to the monitor for display, a window size of the application may further be scaled, and DPI of content displayed in the window of the application is adjusted. Alternatively, if an application interface displayed on the monitor is switched to the mobile phone for display, a window size of the application may be scaled, and DPI of content displayed in the window of the application is adjusted. For example, an application interface of a Huawei Video application is displayed in full screen on the mobile phone. When the application interface of the Huawei Video application is switched to a large-screen device, for example, a smart screen for display, the application interface of the Huawei Video application may be displayed on the smart screen in a form of a floating window, a window in which the application interface of the Huawei Video application is located may be scaled, and DPI of the application interface of the Huawei Video application may be adjusted.

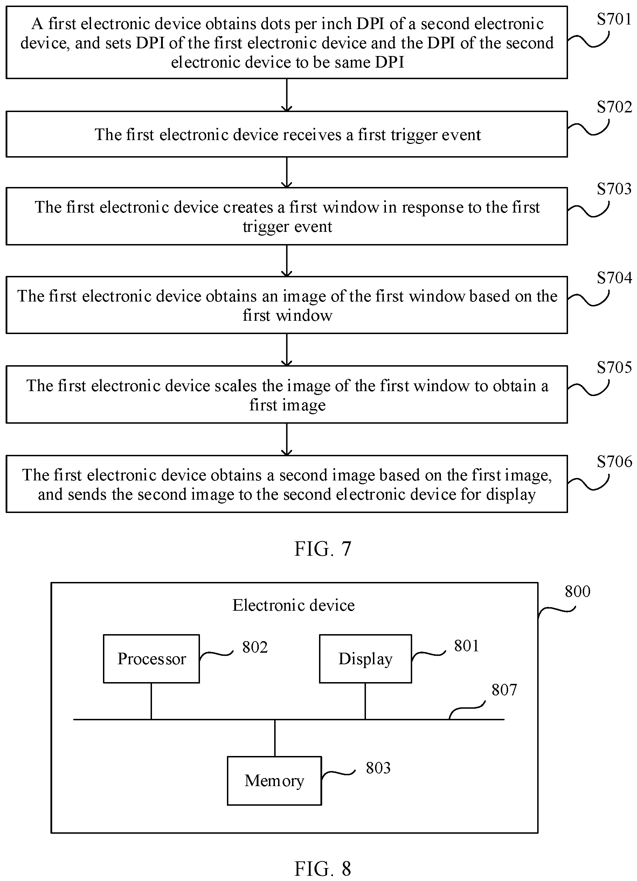

A first electronic device and a second electronic device are used as examples to describe the method in this embodiment of this application. Based on the foregoing embodiments, this application further provides a display method. As shown in FIG. 7, the method may include the following steps.

Before the following steps are performed, the first electronic device may establish a connection to the second electronic device.

S701: The first electronic device obtains dots per inch DPI of the second electronic device, and sets DPI of the first electronic device and the DPI of the second electronic device to be same DPI.

S702: The first electronic device receives a first trigger event.

The first trigger event is a trigger operation performed by a user on an icon of a first application, for example, may be a tapping operation performed by the user on an application icon.

S703: The first electronic device creates a first window in response to the first trigger event.

The first window herein is an application window corresponding to the first application.

S704: The first electronic device obtains an image of the first window based on the first window.

S705: The first electronic device scales the image of the first window to obtain a first image.

S706: The first electronic device obtains a second image based on the first image, and sends the second image to the second electronic device for display.

It should be noted that for S701 in this embodiment shown in FIG. 7, refer to the process of setting the DPI of the mobile phone and the monitor to the same DPI in S301 in this embodiment shown in FIG. 3. For S702 and S703, refer to the detailed descriptions of S302 in this embodiment shown in FIG. 3. For S704, refer to the detailed descriptions of S303 in this embodiment shown in FIG. 3. For S705, refer to the detailed descriptions of S304 in this embodiment shown in FIG. 3. For S706, refer to the detailed descriptions of S305 in this embodiment shown in FIG. 3. In addition, for the user interface in this embodiment shown in FIG. 7, refer to the descriptions in the embodiments shown in FIG. 4(a) and FIG. 4(b) and FIG. 5(a) and FIG. 5(b). Details are not described herein again.

In the foregoing embodiments provided in this application, the method provided in embodiments of this application is described from a perspective in which an electronic device serves as an execution body. To implement the functions in the method provided in the foregoing embodiments of this application, the electronic device may include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

As shown in FIG. 8, some other embodiments of this application disclose an electronic device. The electronic device may be an electronic device having an audio function. As shown in FIG. 8, the electronic device 800 includes: a display 801, one or more processors 802, one or more memories 803, one or more sensors 804 (not shown in the figure), a plurality of applications 805 (not shown in the figure), and one or more computer programs 806 (not shown in the figure). The foregoing components may be connected through one or more communication buses 807.

It should be noted that the electronic device shown in FIG. 8 may be applicable to the first device in the foregoing embodiments, or may be applicable to the second device in the foregoing embodiments.

The display 801 is configured to display a display interface of an application in the electronic device, or display prompt information. The memory 803 stores one or more computer programs, and the one or more computer programs include instructions. The processor 802 invokes the instructions stored in the memory 803, so that the electronic device 800 can perform the display method in the foregoing embodiments.

In embodiments of this application, the processor 802 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware and a software module in the processor. The software module may be located in the memory 803. The processor 802 reads the program instructions from the memory 803, and completes the steps of the foregoing method in combination with the hardware of the processor.

In embodiments of this application, the memory 803 may be a nonvolatile memory such as a hard disk drive (hard disk drive, HDD) or a solid-state drive (solid-state drive, SSD), or may be a volatile memory (volatile memory) such as a RAM. The memory may alternatively be any other medium that can be configured to carry or store expected program code in a form of an instruction structure or a data structure and that can be accessed by a computer. This is not limited thereto. The memory in embodiments of this application may alternatively be a circuit or any other apparatus that can implement a storage function, and is configured to store instructions and/or data.

A person skilled in the art may clearly understand that, for the purpose of convenient and brief description, for a detailed working process of the foregoing apparatus and unit, refer to a corresponding process in the method embodiments. Details are not described herein again.

Based on the foregoing embodiments, this application further provides a computer storage medium. The computer storage medium stores a computer program, and when the computer program is executed by a computer, the computer is enabled to perform the method provided in the foregoing embodiments.

An embodiment of this application further provides a computer program product including instructions, and when the computer program product is run on a computer, the computer is enabled to perform the method provided in the foregoing embodiments.

Embodiments of this application are described with reference to the flowcharts and/or block diagrams of the method, the device (system), and the computer program product according to embodiments of this application. It should be understood that instructions may be used to implement each process and/or each block in the flowcharts and/or the block diagrams and a combination of a process and/or a block in the flowcharts and/or the block diagrams. These instructions may be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can indicate a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

**Claims**

1. A display method, wherein a first electronic device is connected to a second electronic device, and the method comprises:

    obtaining, by the first electronic device, dots per inch DPI of the second electronic device, and setting, by the first electronic device, DPI of the first electronic device and the DPI of the second electronic device to be same DPI; receiving, by the first electronic device, a first trigger event, wherein the first trigger event is a trigger operation performed by a user on an icon of a first application; creating, by the first electronic device, a first window in response to the first trigger event, wherein the first window is an application window corresponding to the first application;
obtaining, by the first electronic device, an image of the first window based on the first window;
scaling, by the first electronic device, the image of the first window to obtain a first image; and
obtaining, by the first electronic device, a second image based on the first image, and sending the second image to the second electronic device for display.

2. The method according to claim 1, wherein the DPI of the first electronic device comprises DPI preset by the first electronic device at delivery and DPI of a virtual display created by the first electronic device.

3. The method according to claim 2, wherein the setting, by the first electronic device, DPI of the first electronic device and the DPI of the second electronic device to be same DPI comprises:
setting, by the first electronic device, the DPI preset by the first electronic device at delivery to DPI that is the same as the DPI of the second electronic device, or setting, by the first electronic device, the DPI of the second electronic device to DPI that is the same as the DPI preset by the first electronic device at delivery.

4. The method according to claim 2, wherein the setting, by the first electronic device, DPI of the first electronic device and the DPI of the second electronic device to be same DPI comprises:

setting, by the first electronic device, the DPI preset by the first electronic device at delivery to DPI that is the same as the DPI of the second electronic device;
setting, by the first electronic device, the DPI of the second electronic device to DPI that is the same as the DPI preset by the first electronic device at delivery;
setting, by the first electronic device, the DPI of the created virtual display to DPI that is the same as the DPI of the second electronic device; or
setting, by the first electronic device, the DPI of the second electronic device to DPI that is the same as the DPI of the created virtual display.

5. The method according to any one of claims 1 to 4, wherein the creating, by the first electronic device, a first window comprises:
obtaining, by the first electronic device, a size of a preset window and a preset scale ratio, and creating, by the first electronic device, the first window based on the size of the preset window and the preset scale ratio.

6. The method according to claim 5, wherein the scaling, by the first electronic device, the image of the first window to obtain a first image comprises:
scaling, by the first electronic device, the image of the first window based on the preset scale ratio, to obtain the first image.

7. The method according to claim 5 or 6, wherein the preset scale ratio is a ratio of the DPI preset by the first electronic device at delivery to DPI set in advance by the second electronic device, or the preset scale ratio is a ratio of the DPI preset by the first electronic device at delivery to DPI preset by the second electronic device at delivery.

8. The method according to any one of claims 1 to 7, wherein the receiving, by the first electronic device, a first trigger event comprises:
receiving, by the first electronic device, the first trigger event triggered by the user on the first electronic device; or
receiving, by the first electronic device, the first trigger event sent by the second electronic device, wherein the first trigger event is triggered by the user on the second electronic device.

9. The method according to claim 2, wherein the image of the first window is displayed on a display of the first electronic device or the virtual display created by the first electronic device.

10. The method according to any one of claims 1 to 9, wherein the obtaining, by the first electronic device, a second image based on the first image comprises:
synthesizing, by the first electronic device, a layer at which the first image is located and a layer at which a background is located, to obtain the second image.

11. The method according to any one of claims 1 to 10, wherein that a first electronic device is connected to a second electronic device comprises:
the first electronic device is connected to the second electronic device through Wi-Fi, a Bluetooth connection, or a wired connection.

12. The method according to any one of claims 1 to 11, wherein a window type of the first window is a floating window, a full-screen window, or an app multiplier.

13. An electronic device, comprising a display, one or more processors, one or more memories, one or more sensors, a plurality of applications, and one or more computer programs, wherein
the one or more computer programs are stored in the one or more memories, the one or more computer programs comprise instructions, and when the instructions are invoked and executed by the one or more processors, the electronic device is enabled to perform the method according to any one of claims 1 to 12.

14. A computer-readable storage medium, wherein the computer-readable storage medium stores instructions, and when the instructions are run on an electronic device, the electronic device is enabled to perform the method according to any one of claims 1 to 12.

15. A computer program product, wherein when the computer program product is run on an electronic device, the electronic device is enabled to perform the method according to any one of claims 1 to 12.

Mobile
phone 10

Monitor 20

FIG. 1

Mobile phone 100

Antenna 1

Antenna 2

150

160

Mobile communication module 2G/3G/4G/5G

Wireless communication module BT/WLAN/GNSS/NFC/IR/FM

180

170

Sensor module

170A — Speaker

170B — Receiver

170C — Microphone

170D — Headset jack

Audio module

Pressure sensor — 180A

Gyroscope sensor — 180B

Barometric pressure sensor — 180C

Magnetic sensor — 180D

110

194 — Displays 1 to N

193 — Cameras 1 to N

192 — Indicator

191 — Motor

190 — Button

121 — Internal memory

195 — SIM card interfaces 1 to N

120 — External memory interface

Processor

Acceleration sensor — 180E

Distance sensor — 180F

Optical proximity sensor — 180G

Fingerprint sensor — 180H

Temperature sensor — 180J

Touch sensor — 180K

Ambient light sensor — 180L

Bone conduction sensor — 180M

140

130 — USB interface

Charging input

Charging management module

Power management module — 141

Battery — 142

FIG. 2

A mobile phone establishes a connection to a monitor — S301

Create a first window in response to a first operation of a user — S302

The mobile phone performs drawing and rendering operations on content of the first window, to obtain an image of the first window — S303

The mobile phone scales the image of the first window based on a preset scale ratio, to obtain a first image — S304

The mobile phone sends a second image to the monitor for display — S305

FIG. 3

FIG. 4(a)

CONT.
FROM
FIG. 4(a)

Clock    Calendar    Gallery    Notepad

Files    Email    Music    Calculator

HUAWEI    Huawei    Weather    Browser
Video    Health

Wireless Projection

Available device list

HUASHAN monitor
Supporting projection in a desktop
mode or a mobile phone mode

AAA
Supporting projection in a desktop
mode or a mobile phone mode

Cancel                    Help

FIG. 4(b)

Notepad

☰ All notes

🔍 Search for notes

Notepad content 1
7:30

Notepad content 2
Yesterday

➕

✓
To-dos

Notes

TO
FIG. 5(b)

FIG. 5(a)

CONT.
FROM
FIG. 5(a)
~

Notepad

☰  All notes

◦ Search for notes

Notepad content 1
7:30

Notepad content 2
Yesterday

⊕

☑
Notes                                   To-dos

FIG. 5(b)

Notepad

≡  All notes

🔍  Search for notes

Notepad content 1
7:30

Notepad content 2
Yesterday

⊕

← 

Notepad content 1
May 10, 2021, 7:30
To-do list for today is as follows:
1. Read for one hour
2. Exercise for one hour

Notes          To-dos          Share   Favourite   Delete   More

TO
FIG. 6(b)

FIG. 6(a)

CONT.
FROM
FIG. 6(a)

Notepad

≡ All notes

Q Search for notes

Notepad content 1
7:30

Notepad content 2
Yesterday

⊕

Notes        To-dos

←
Notepad content 1
May 10, 2021, 7:30

To-do list for today is as
follows:

1. Read for one hour
2. Exercise for one hour

Share  Favourite  Delete  More

FIG. 6(b)

A first electronic device obtains dots per inch DPI of a second electronic device, and sets DPI of the first electronic device and the DPI of the second electronic device to be same DPI ⟩ S701

The first electronic device receives a first trigger event ⟩ S702

The first electronic device creates a first window in response to the first trigger event ⟩ S703

The first electronic device obtains an image of the first window based on the first window ⟩ S704

The first electronic device scales the image of the first window to obtain a first image ⟩ S705

The first electronic device obtains a second image based on the first image, and sends the second image to the second electronic device for display ⟩ S706

FIG. 7

Electronic device    800

Processor    802        Display    801
                                    807

Memory    803

FIG. 8

## INTERNATIONAL SEARCH REPORT

| International application No. |
|---|
| **PCT/CN2022/107429** |

| A. | CLASSIFICATION OF SUBJECT MATTER |
|---|---|

G06F 3/14(2006.01)i

According to International Patent Classification (IPC) or to both national classification and IPC

| B. | FIELDS SEARCHED |
|---|---|

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS; CNTXT; WPABS; VEN; ENTXT; USTXT; EPTXT; WOTXT; CNKI: 屏幕, 共享, 投射, 扩展, 投屏, 传屏, 密度, 像素, 分辨率, 虚拟, screen, share, project, send, external, density, pixel, resolution, virtual

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114356258 A (HUAWEI TECHNOLOGIES CO., LTD.) 15 April 2022 (2022-04-15) description, paragraphs 105-139, and figures 1-4 | 1-15 |
| PX | CN 114510203 A (HONOR TERMINAL CO., LTD.) 17 May 2022 (2022-05-17) description, paragraphs 106-151, and figures 3a-3c and 6 | 1-15 |
| PX | CN 114115769 A (HUAWEI TECHNOLOGIES CO., LTD.) 01 March 2022 (2022-03-01) description, paragraphs 35-51 and 157-243, and figures 4A-8 | 1-15 |
| X | US 2018246634 A1 (SAMSUNG ELECTRONICS CO., LTD.) 30 August 2018 (2018-08-30) description, paragraphs 49-85, 145-155, 196, and 217, and figures 1-2 and 8 | 1-15 |
| X | US 2012274656 A1 (KANG, Y. J. et al.) 01 November 2012 (2012-11-01) description, paragraphs 50-59 and 94-126, and figures 1A-3 and 8-10 | 1-15 |
| X | CN 105900074 A (SAMSUNG ELECTRONICS CO., LTD.) 24 August 2016 (2016-08-24) description, paragraphs 71-83 and 113-124, and figures 4A-4D, 8, and 13 | 1-15 |
| A | CN 111596878 A (BEIJING BAIDU NETCOM SCIENCE AND TECHNOLOGY CO., LTD.) 28 August 2020 (2020-08-28) entire document | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 September 2022** | **30 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

# EP 4 361 790 A1

<div align="center">

**INTERNATIONAL SEARCH REPORT**
**Information on patent family members**

</div>

International application No.

**PCT/CN2022/107429**

| Patent document cited in search report | | | Publication date (day/month/year) | Patent family member(s) | | | Publication date (day/month/year) |
|---|---|---|---|---|---|---|---|
| CN | 114356258 | A | 15 April 2022 | None | | | |
| CN | 114510203 | A | 17 May 2022 | WO | 2022100326 | A1 | 19 May 2022 |
| CN | 114115769 | A | 01 March 2022 | None | | | |
| US | 2018246634 | A1 | 30 August 2018 | KR | 20180099352 | A | 05 September 2018 |
| | | | | EP | 3367225 | A1 | 29 August 2018 |
| | | | | EP | 3678011 | A1 | 08 July 2020 |
| | | | | US | 2021349610 | A1 | 11 November 2021 |
| | | | | ES | 2778061 | T3 | 07 August 2020 |
| | | | | EP | 3367225 | B1 | 26 February 2020 |
| | | | | US | 11086494 | B2 | 10 August 2021 |
| | | | | KR | 102303420 | B1 | 23 September 2021 |
| US | 2012274656 | A1 | 01 November 2012 | WO | 2012148087 | A2 | 01 November 2012 |
| | | | | KR | 20120122882 | A | 07 November 2012 |
| | | | | KR | 20130054971 | A | 27 May 2013 |
| | | | | KR | 20140045966 | A | 17 April 2014 |
| CN | 105900074 | A | 24 August 2016 | US | 2015193187 | A1 | 09 July 2015 |
| | | | | KR | 20150082940 | A | 16 July 2015 |
| | | | | EP | 3092572 | A1 | 16 November 2016 |
| | | | | WO | 2015105345 | A1 | 16 July 2015 |
| | | | | US | 10121449 | B2 | 06 November 2018 |
| | | | | KR | 2122476 | B1 | 12 June 2020 |
| CN | 111596878 | A | 28 August 2020 | KR | 20210038461 | A | 07 April 2021 |
| | | | | JP | 2021119387 | A | 12 August 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110877514